(19) Europäisches Patentamt / European Patent Office / Office européen des brevets

(11) **EP 4 439 401 A1**

(12) **EUROPEAN PATENT APPLICATION**

(43) Date of publication:
**02.10.2024 Bulletin 2024/40**

(21) Application number: **23166009.3**

(22) Date of filing: **31.03.2023**

(51) International Patent Classification (IPC):
**G06N 5/022** (2023.01)　　**G06N 20/00** (2019.01)
**G06N 5/01** (2023.01)　　**G10L 15/183** (2013.01)

(52) Cooperative Patent Classification (CPC):
**G06N 20/00; G06N 5/01; G06N 5/022;** G10L 15/183

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Hildebrandt, Marcel
80634 München (DE)**
• **Mogoreanu, Serghei
81827 München (DE)**
• **Pol, Sebastian
90556 Seukendorf (DE)**

(74) Representative: **Siemens Patent Attorneys
Postfach 22 16 34
80506 München (DE)**

(54) **METHOD AND SYSTEM FOR RECOMMENDING A MACHINE LEARNING PIPE-LINE FOR AN INDUSTRIAL USE CASE**

(57) The recommender system uses as input a new use case description (UCD), which is a free-form text description of a new industrial use case for machine learning. A set of available use cases is initialized by filling it with previous industrial use cases for machine learning. A graph database provides a knowledge graph (KG) containing for each available use case at least one attribute, and a machine learning pipeline that has been suitable. A language model (LM) computes a vector space embedding for the new use case description and for available use case descriptions. Relevance scores are computed for each available use case in the embedding space. A questionnaire component (QC) iteratively selects questions, which are binary questions corresponding to an attribute in the knowledge graph that splits the set of available use cases into two sets, wherein the sums of the relevance scores of the available use cases in the two sets are approximately the same, and incrementally filters the available use cases in the knowledge graph by removing use cases from the set of available use cases based on the answer to the question. If there is only one available use case remaining or if a user interface (UI) detects a selection of one of the available use cases, the machine learning pipeline (MLP) that is linked in the knowledge graph to that use case is recommended to a user (U).

FIG 3

EP 4 439 401 A1

**Description**

Over the past two decades, advancements in machine learning have transformed the factory floors and processes in a number of industries, ranging from process industries (e.g., oil and gas, power and utilities, water and wastewater) to hybrid industries (e.g., food and beverage, wind) to discrete industries (e.g., automotive manufacturing, aerospace, robotics). Making use of machine learning solutions in any of these industries requires the construction of an ETL (Extract, Transform, Load) pipeline, the selection of a suitable machine learning model and hyperparameters, and a deployment infrastructure. Performing all these steps from scratch is laborious and requires expertise about the domain and task at hand as well as dedicated knowledge about machine learning.

Currently, the task is addressed by manually selecting or constructing from scratch machine learning pipelines based on domain knowledge and machine learning expertise or via browsing catalogues of machine learning pipelines using static filters. However, the latter option might be laborious and error prone.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for recommending a machine learning pipeline for an industrial use case, the following operations are performed by components, wherein the components are hardware components and/or software components executed by one or more processors:

- receiving, by a user interface, a new use case description, which is a free-form text description of a new industrial use case for machine learning,
- initializing a set of available use cases by filling it with previous industrial use cases for machine learning,
- providing, by a database, an available use case description for each available use case,
- providing, by a graph database, a knowledge graph, wherein the knowledge graph contains for each available use case

    - a node representing the available use case,
    - at least one node representing an attribute of the available use case, and
    - a node representing a machine learning pipeline that has been suitable for implementing machine learning for the available use case,

- computing, by a language model, a vector space embedding for the new use case description and for each of the available use case descriptions,
- computing a relevance score for each available use case by computing a similarity of the new use case description and the respective available use case description in the embedding space,
- iteratively outputting, by the user interface, questions and receiving corresponding answers, wherein the questions are iteratively selected by a questionnaire component, which in each iteration

    - selects a question, wherein the question is a binary question corresponding to an attribute in the knowledge graph that splits the set of available use cases into two sets, wherein the sums of the relevance scores of the available use cases in the two sets are approximately the same,
    - incrementally filters the available use cases in the knowledge graph by removing use cases from the set of available use cases based on the answer to the question, and
    - if there is only one available use case remaining or if the user interface detects a selection of one of the available use cases, selects the respective use case and terminates the iterative loop, and

- outputting, by the user interface, the machine learning pipeline that is linked in the knowledge graph to the selected use case.

The system for recommending a machine learning pipeline for an industrial use case comprises the following components, wherein the components are hardware components and/or software components executed by one or more processors:

- a user interface, configured for receiving a new use case description, which is a free-form text description of a new industrial use case for machine learning,
- a processor, configured for

    - initializing a set of available use cases by filling it with previous industrial use cases for machine learning,

- a database, configured for providing an available use case description for each available use case,
- a graph database, configured for providing a knowledge graph, wherein the knowledge graph contains for each available use case

  - a node representing the available use case,
  - at least one node representing an attribute of the available use case, and
  - a node representing a machine learning pipeline that has been suitable for implementing machine learning for the available use case,

- a language model, configured for computing a vector space embedding for the new use case description and for each of the available use case descriptions,
- wherein the processor is configured for

  - computing a relevance score for each available use case by computing a similarity of the new use case description and the respective available use case description in the embedding space,

- wherein the user interface is configured for

  - iteratively outputting questions and receiving corresponding answers,

- a questionnaire component, configured for iteratively selecting the questions, wherein in each iteration the questionnaire component

  - selects a question, wherein the question is a binary question corresponding to an attribute in the knowledge graph that splits the set of available use cases into two sets, wherein the sums of the relevance scores of the available use cases in the two sets are approximately the same,
  - incrementally filters the available use cases in the knowledge graph by removing use cases from the set of available use cases based on the answer to the question, and
  - if there is only one available use case remaining or if the user interface detects a selection of one of the available use cases, selects the respective use case and terminates the iterative loop, and

- wherein the user interface is configured for

  - outputting the machine learning pipeline that is linked in the knowledge graph to the selected use case.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, assist the selection and construction of machine learning pipelines, by providing an interactive data-driven recommender system where the user can describe a use case by providing both structured and unstructured information to get recommendations for machine learning pipelines. The unstructured information refers to the user describing his industrial use case in free text, for example. The structured information refers to the knowledge graph, for example.

The method and system, or at least some of their embodiments, exploit both a free-form description as well as structured information to automatically generate an adaptive/dynamic questionnaire querying the user. Different questions are being asked in each instantiation of the questionnaire based on the new use case description. The recommendation for the machine learning pipeline is based both on the answers to the automatically generated questionnaire and on the output of a language model that analyzes the new use case description.

The method and system, or at least some of their embodiments, use a fusion mechanism that leverages both the neural search capabilities of language embedding models as well as attributes of use cases which are modelled as entities in the knowledge graph that stores structured information and relationships between industrial use cases, data sets, and machine learning pipelines, for example.

In contrast to commonly used approaches based on static filtering, the method and system, or at least some of their embodiments, do not only rely on a set of predefined attributes. Instead, they allow the user to describe the use case at hand in her own words.

Moreover, the method and system, or at least some of their embodiments, are more efficient (in the sense that the user needs to answer less questions) compared to a conventional questionnaire, since the questions are selected to lead to the largest expected information gain.

In an embodiment of the method, a set of available attributes is initialized with all attributes in the knowledge graph. The questionnaire component selects each question by computing for each attribute in the set of available attributes a Gini index, selecting the question that corresponds to the attribute with the largest Gini index, and removing that attribute from the set of available attributes.

In another embodiment of the method and system, the attributes of the available use cases include equipped hardware, data modalities, and labels.

In yet another embodiment of the method and system, the language model is a pretrained transformer model.

The computer program product has program instructions for carrying out the method.

The provision device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1     shows a first embodiment,

Fig. 2     shows another embodiment,

Fig. 3     shows an overview of components forming a first embodiment of a system for recommending a machine learning pipeline for an industrial use case,

Fig. 4     shows an example of a suitable knowledge graph schema,

Fig. 5     shows a step in generating a dynamic questionnaire,

Fig. 6     shows a step in generating a dynamic questionnaire,

Fig. 7     shows a step in generating a dynamic questionnaire,

Fig. 8     shows a step in generating a dynamic questionnaire,

Fig. 9     shows a flowchart of a possible exemplary embodiment of a method for recommending a machine learning pipeline for an industrial use case.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

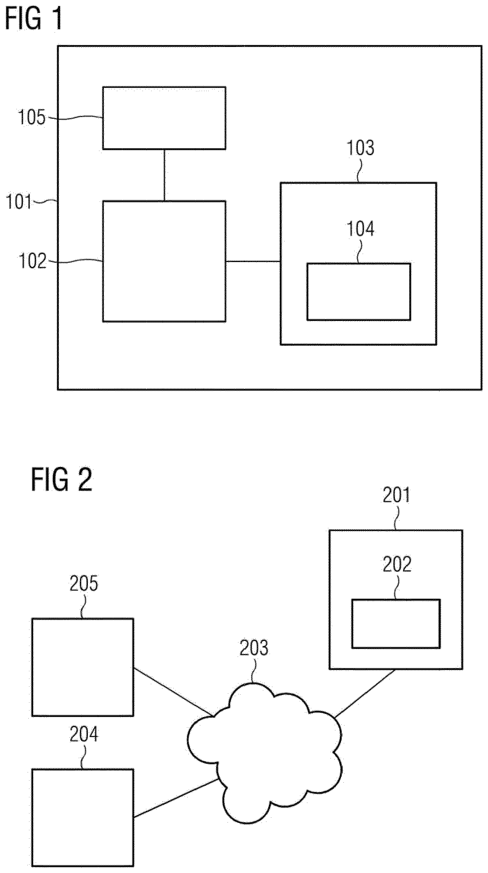

Fig. 1 shows one sample structure for computer-implementation of the invention which comprises:

(101)     computer system
(102)     processor
(103)     memory
(104)     computer program (product)
(105)     user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201)     provisioning device
(202)     computer program (product)
(203)     computer network / Internet
(204)     computer system
(205)     mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

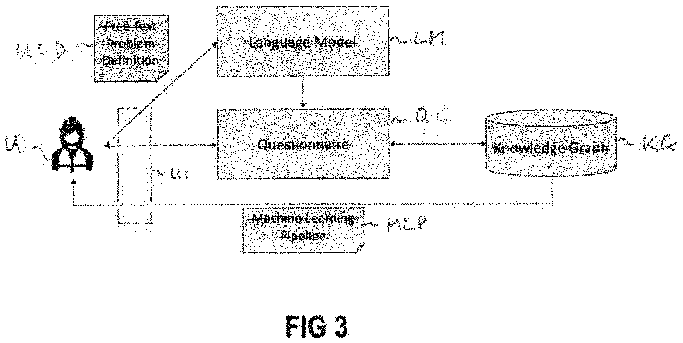

Preferably, the embodiments shown in Figs. 3 to 9 can be implemented with a structure as shown in Fig. 1 or Fig. 2.

The following embodiments refer to an interactive system that supports a user in identifying a suitable machine learning pipeline based on an intended application area, available data, and the task at hand. The embodiments use both an unstructured, free-form description of an industrial use case as well as a knowledge graph that stores heterogeneous information about industrial use cases, datasets, and machine learning pipelines.

More specifically, the following embodiments employ a sequential procedure to query use case requirements and a mechanism to efficiently select follow-up questions that leverages semantic similarity of the free-form description to iteratively select questions that lead to the largest expected information gain.

On a high level, the embodiments described below operate in the following setting:
The user is a subject matter expert that faces a particular industrial problem. Initially, there is either no machine learning pipeline deployed that addresses the problem, or the current pipeline is working sub-optimally. Thereby, it is assumed that the user is not a machine learning expert and may not be able to pin down the task at hand using the correct technical vocabulary. For example, the user might be a service engineer that wants to perform predictive maintenance for a fleet of motors but depending on the available data (e.g., depending on the equipped sensors, observed failures, or previous maintenance events), predictive maintenance in this setting may correspond to very different machine learning tasks ranging from unsupervised time-series anomaly detection based on vibration data to supervised image classification based on a visual quality inspection station. The objective of the proposed system is to identify a machine learning pipeline in an efficient manner that can operate in the required setting (i.e., it addresses the correct machine learning task, correctly makes use of the available data, hardware, sensors, etc.).

Fig. 3 shows an overview of components forming a first embodiment of a system for recommending a machine learning pipeline for an industrial use case.

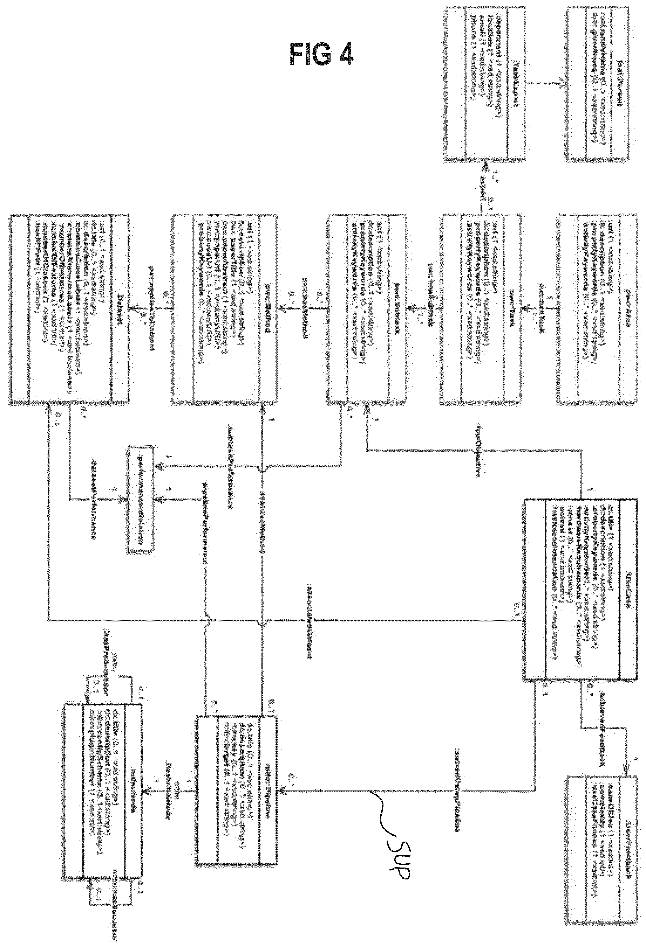

A knowledge graph KG stored in a graph database structures information on different machine learning tasks, datasets, industrial use cases, and machine learning pipelines in terms of an RDF graph. A concrete example of a suitable knowledge graph schema is shown in Fig. 4. The purpose of the knowledge graph KG is to structure relations between the stored entities. In particular, the knowledge graph KG stores various attributes of the use cases (with regards to the equipped hardware, data modalities, labels, etc.) and the information which machine learning pipelines are deployed in which industrial use cases (via a "solvedUsingPipeline" relation SUP shown in Fig. 4).

A user interface UI receives a use case description UCD from a user U, which is a free text problem definition for the intended use case.

A language model LM, such as a pretrained transformer model as disclosed in Vaswani et al.: "Attention is all you need", arXiv:1706.03762v5 [cs.CL], available on the internet at https://doi.org/10.48550/arXiv.1706.03762 on March 21, 2023, produces a vector space embedding for the user-provided use case description UCD. Formally, the language model LM corresponds to a mapping $f: \mathcal{D} \rightarrow \mathbb{R}^n$, where $\mathcal{D}$ denotes the space of use case descriptions and $n$ the dimensionality of the embedding space. The vector space embeddings allow to compute similarities between texts (e.g., angular similarities) to retrieve similar use cases.

A questionnaire component QC that is powered both by the knowledge graph KG and the language model LM successively selects questions that are presented to the user U. Based on the use case description UCD as well as the answers provided by the user, the questionnaire component QC filters the set of available use cases in the knowledge graph KG.

The questionnaire component QC uses a novel heuristic for generating a dynamic questionnaire. Here, the term "dynamic" refers to the fact, that the questionnaire component QC iteratively selects one question after the other by taking the previous answers and the use case description UCD of the user U into account.

Concretely, the current embodiment denotes with

$$\mathcal{D} \supset D =$$

$\{d_1, d_2, ..., d_k\}$ a set of available use cases and with **d** the current use case description UCD that was provided by the user. Moreover, let $X = [f(d_1); f(d_2); ...; f(d_k)] \in \mathbb{R}^{k \times n}$ denote the embeddings matrix that contains as rows the embeddings of all available use case descriptions (the semicolon indicates rowwise concatenation of vectors to form a matrix). Then the normalized scores

$$[p_1, p_2, ..., p_k] = softmax(Xf(d)^T) \qquad (1)$$

indicate the similarity of the use cases in the embedding space. The current embodiment interprets the entries in $[p_1, p_2, ..., p_k]$ as indicators for the relevance of the available use cases with regard to the current use case.

In the next step, heuristically speaking, the goal of the questionnaire component QC is to select a binary question corresponding to a use case attribute that allows to split a given set of solutions into two sets of approximately same relevance.

Concretely, we denote with

$$p_f = \sum_{i \in \mathcal{F}_f} p_i$$

the sum of all relevance scores of the use cases where a certain attribute $f$ is true (i.e., $\mathcal{F}_f$ denotes the collection of all use cases where the attribute f is true). Subsequently, the questionnaire component QC selects the next question that maximizes the *Gini index*

$$Gini\ index = p_f(1 - p_f) \qquad (2)$$

Intuitively speaking, by selecting the question with the largest *Gini index,* the questionnaire component QC picks the question that approximately bisects the weighted space of available use cases, thus minimizing the expected number of questions that the questionnaire component QC needs to ask the user U to find the relevant set of use cases.

Then the questionnaire component QC presents the question to the user U (e.g., "Do you have access to labeled data?") and filters the set of available use cases based on the answer (e.g, if the user U answers "No" to the previous example question, all supervised approaches that require labeled data are filtered out).

Then the questionnaire component QC iterates the procedure (select a question -> filter use cases based on the answer -> select a question -> ...) until the user U selects a use case from the set of available use cases. In turn, the embodiment recommends a machine learning pipeline MLP that was used to solve that use case to the user U.

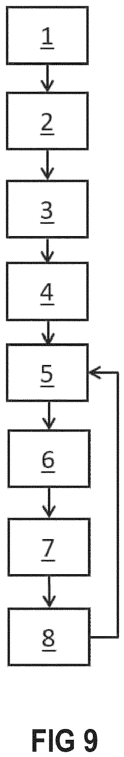

Fig. 9 shows a flowchart of a possible exemplary embodiment of a method for recommending a machine learning pipeline for an industrial use case, which corresponds to the above-described embodiment.

In a first operation 1, a user interface receives from the user U shown in Fig. 3 the use case description UCD shown in Fig. 3, which is a free-form description **d** of the use case at hand.

In a second operation 2, the set of available use cases **D** is initialized with the set of all use cases contained in the knowledge graph KG.

In a third operation 3, the language model LM shown in Fig. 3 is used to compute the embedding matrix **X** and the embedding *l*(**d**).

In a fourth operation 4, all relevance scores are computed according to formula (1).

In a fifth operation 5, for each available attribute **f** the embodiment computes the *Gini index* according to formula (2) .

In a sixth operation 6, the questionnaire component QC selects the question/attribute f with the largest *Gini index,* presents it to the user U, and removes it from the set of available attributes.

In a seventh operation 7, if the user U answers "yes" to the question then the set of available use cases is set to $D \leftarrow \mathcal{F}_f$ . In case "no" is selected $D \leftarrow D / \mathcal{F}_f$ .

In an eighth operation 8, the workflow terminates if a use case can be selected from **D,** and the machine learning pipeline MLP that was deployed for the selected use case (see Figs. 3 and 4) is recommended to the user U. Otherwise, the embodiment returns to the fifth operation 5 and iterates.

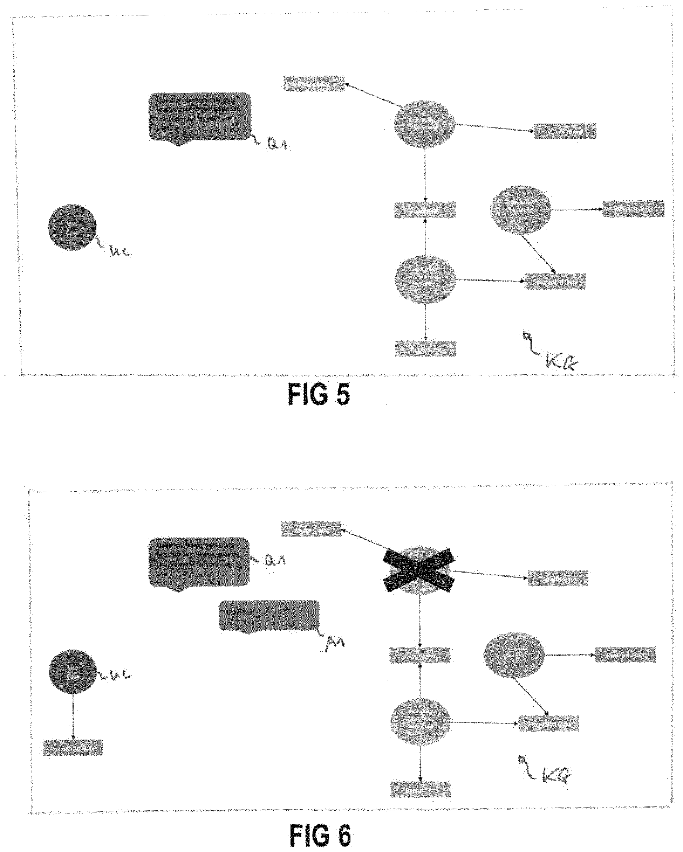

The sequence of Figs. 5-8 shows a simplified example of how a dynamic questionnaire is generated by the questionnaire component.

Fig. 5 shows a knowledge graph KG containing three use cases: a 2D Image Classification, Univariate Time Series Forecasting, and Time Series Clustering. The questionnaire component asks a first question Q1 about the nature of the data, in order to determine a use case UC.

In Fig. 6, the user gives a first answer A1 stating that the processed data is sequential. As a result, the embodiment determines that the use case UC processes sequential data and rules out the 2D Image Classification use case from the knowledge graph KG.

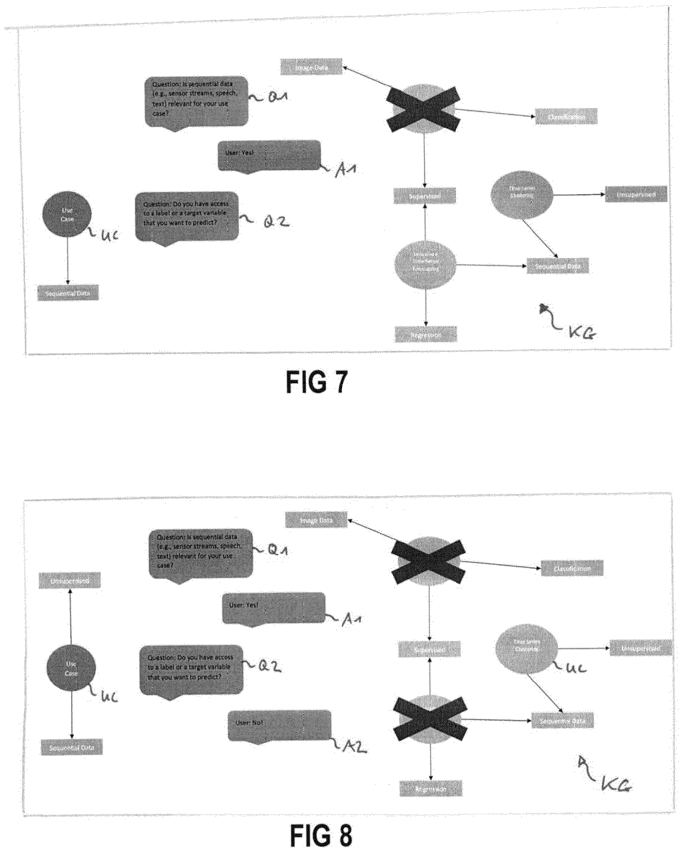

In Fig. 7, the questionnaire component asks a second question Q2 regarding the learning methodology.

In Fig. 8, the user gives a second answer A2 stating that she requires unsupervised learning. As a result, the embodiment determines that the use case UC requires unsupervised learning and rules out the Univariate Time Series Forecasting use case from the knowledge graph KG.

Now, the only remaining use case in the knowledge graph KG, Time Series Clustering, is identified by the embodiment as a fit for the use case UC of the user, and the embodiment suggests to the user a machine learning pipeline that was used for this Time Series Clustering use case.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for recommending a machine learning pipeline for an industrial use case, wherein the following operations are performed by components, and wherein the components are hardware components and/or software components executed by one or more processors:

- receiving (1), by a user interface (UI), a new use case description (UCD), which is a free-form text description of a new industrial use case for machine learning,
- initializing (2) a set of available use cases by filling it with previous industrial use cases for machine learning,
- providing, by a database, an available use case description for each available use case,
- providing, by a graph database, a knowledge graph (KG), wherein the knowledge graph (KG) contains for each available use case

  - a node representing the available use case,
  - at least one node representing an attribute of the available use case, and
  - a node representing a machine learning pipeline that has been suitable for implementing machine learning for the available use case,

- computing (3), by a language model (LM), a vector space embedding for the new use case description (UCD) and for each of the available use case descriptions,
- computing (4) a relevance score for each available use case by computing a similarity of the new use case description (UCD) and the respective available use case description in the embedding space,
- iteratively outputting, by the user interface (UI), questions and receiving (7) corresponding answers, wherein the questions are iteratively selected by a questionnaire component (QC), which in each iteration

  - selects a question, wherein the question is a binary question corresponding to an attribute in the knowledge graph (KG) that splits the set of available use cases into two sets, wherein the sums of the relevance scores of the available use cases in the two sets are approximately the same,
  - incrementally filters the available use cases in the knowledge graph (KG) by removing use cases from the set of available use cases based on the answer to the question, and
  - if there is only one available use case remaining or if the user interface (UI) detects a selection of one of the available use cases, selects the respective use case and terminates (8) the iterative loop, and

- outputting, by the user interface (UI), the machine learning pipeline (MLP) that is linked in the knowledge graph (KG) to the selected use case.

2. The method according to claim 1, wherein

   - a set of available attributes is initialized with all attributes in the knowledge graph (KG), and
   - the questionnaire component (QC) selects each question by

     - computing (5) for each attribute in the set of available attributes a Gini index,
     - selecting (6) the question that corresponds to the attribute with the largest Gini index, and
     - removing that attribute from the set of available attributes.

3. The method according to any of the preceding claims,

   - wherein the attributes of the available use cases include equipped hardware, data modalities, and labels.

4. The method according to any of the preceding claims,

   - wherein the language model (LM) is a pretrained transformer model.

5. A system for recommending a machine learning pipeline for an industrial use case, comprising the following components, wherein the components are hardware components and/or software components executed by one or more processors:

   - a user interface (UI), configured for receiving (1) a new use case description (UCD), which is a free-form text description of a new industrial use case for machine learning,
   - a processor, configured for

     - initializing (2) a set of available use cases by filling it with previous industrial use cases for machine learning,

- a database, configured for providing an available use case description for each available use case,
- a graph database, configured for providing a knowledge graph (KG), wherein the knowledge graph (KG) contains for each available use case

- a node representing the available use case,
- at least one node representing an attribute of the available use case, and
- a node representing a machine learning pipeline that has been suitable for implementing machine learning for the available use case,

- a language model (LM), configured for computing (3) a vector space embedding for the new use case description (UCD) and for each of the available use case descriptions,
- wherein the processor is configured for

- computing (4) a relevance score for each available use case by computing a similarity of the new use case description (UCD) and the respective available use case description in the embedding space,

- wherein the user interface (UI) is configured for

- iteratively outputting questions and receiving (7) corresponding answers,

- a questionnaire component (QC), configured for iteratively selecting the questions, wherein in each iteration the questionnaire component (QC)

- selects a question, wherein the question is a binary question corresponding to an attribute in the knowledge graph (KG) that splits the set of available use cases into two sets, wherein the sums of the relevance scores of the available use cases in the two sets are approximately the same,
- incrementally filters the available use cases in the knowledge graph (KG) by removing use cases from the set of available use cases based on the answer to the question, and
- if there is only one available use case remaining or if the user interface (UI) detects a selection of one of the available use cases, selects the respective use case and terminates (8) the iterative loop, and

- wherein the user interface (UI) is configured for

- outputting the machine learning pipeline (MLP) that is linked in the knowledge graph (KG) to the selected use case.

6. Computer program product with program instructions for carrying out a method according to one of the method claims.

7. Provision device for the computer program product according to the preceding claim, wherein the provision device stores and/or provides the computer program product.

FIG 1

FIG 2

Free Text Problem Definition ~ UCD

Language Model ~ LM

U ~ (user)

~ UI

Questionnaire ~ QC

Knowledge Graph ~ KG

Machine Learning Pipeline ~ MLP

FIG 3

FIG 4

FIG 5

FIG 6

FIG 7

FIG 8

FIG 9

Europäisches
Patentamt

European
Patent Office

Office européen
des brevets

# EUROPEAN SEARCH REPORT

Application Number

EP 23 16 6009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZACARIAS ALEJANDRO GABRIEL VILLANUEVA ET AL: "AssistML: A Concept to Recommend ML Solutions for Predictive Use Cases", 2021 IEEE 8TH INTERNATIONAL CONFERENCE ON DATA SCIENCE AND ADVANCED ANALYTICS (DSAA), IEEE, 6 October 2021 (2021-10-06), pages 1-12, XP033991499, DOI: 10.1109/DSAA53316.2021.9564168 [retrieved on 2021-10-07] * the whole document * | 1-7 | INV. G06N5/022 G06N20/00 G06N5/01 ADD. G10L15/183 |
| A | US 2021/312361 A1 (DALEY STAN KEVIN [US] ET AL) 7 October 2021 (2021-10-07) * the whole document * | 1-7 | |
| A | MARTINA GAROFALO ET AL: "Leveraging Knowledge Graph Embedding Techniques for Industry 4.0 Use Cases", ARXIV.ORG, CORNELL UNIVERSITY LIBRARY, 201 OLIN LIBRARY CORNELL UNIVERSITY ITHACA, NY 14853, 31 July 2018 (2018-07-31), XP081254513, * Sections 2-4 * | 1-7 | TECHNICAL FIELDS SEARCHED (IPC) G06N G10L |
| A | US 11 475 330 B2 (DMASS INC [US]) 18 October 2022 (2022-10-18) * the whole document * | 1-7 | |

The present search report has been drawn up for all claims

| Place of search | Date of completion of the search | Examiner |
|---|---|---|
| The Hague | 17 July 2023 | Malatesta, Lori |

## ANNEX TO THE EUROPEAN SEARCH REPORT
## ON EUROPEAN PATENT APPLICATION NO.

EP 23 16 6009

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2023

| Patent document cited in search report | | Publication date | Patent family member(s) | | Publication date |
|---|---|---|---|---|---|
| US 2021312361 | A1 | 07-10-2021 | NONE | | |
| US 11475330 | B2 | 18-10-2022 | US 2020387812 | A1 | 10-12-2020 |
| | | | WO 2020247868 | A1 | 10-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VASWANI et al.** Attention is all you need. *arXiv:1706.03762v5,* 21 March 2023, https://doi.org/10.48550/arXiv.1706.03762